# EUROPEAN PATENT SPECIFICATION

(11) **EP 1 935 247 B1**
(45) Date of publication and mention of the grant of the patent: **11.11.2009**
(21) Application number: 06256511.4
(22) Date of filing: 21.12.2006
(51) Int. Cl.: A21C 9/08, F26B 15/08

(54) **Rolling, cutting and drying system for pasta**
System zum Ausrollen, Schneiden und Trocknen von Teigwaren
Système pour rouler, découper et sécher des pâtes

(43) Date of publication of application: 25.06.2008
(73) Proprietor: Pastificio Fazion SpA, Casaleone (VR) (IT)
(72) Inventor: DERBYSHIRE, Martin James., Dublin 2 (IE)
(74) Representative: Reniero, Cirillo Silvano

(56) References cited:
- EP-A1- 0 541 896
- EP-A2- 0 381 001
- FR-A- 1 051 796
- GB-A- 677 284
- GB-A- 1 182 071
- GB-A- 190 521 087
- US-A- 2 648 420
- US-A- 3 034 631
- US-A- 5 397 214
- US-A- 5 687 641

## Description

The present invention regards a rolling, cutting and drying system for sheet-shaped pasta.

Conventional rolling, cutting and drying systems for pasta sheets comprise a drying oven, a conveyor which is intended to move the sheets inside the oven, an oven feed group of pasta sheets to be dried and an extractor group of the dried pasta.

The conveyor can typically be a conveyor with two twin chains driven around two pairs of sprocket wheels, the chains supporting and driving an uninterrupted sequence of flat pasta support elements which are maintained uniformly spaced from each other. Between two adjacent and contiguous support elements, a support space or zone is defined for one or more sheet pieces. Each support element in one section of the conveyor (the outgoing section) is supported on its side and rises upward with respect to the conveyor chain, while in the return section they are hung from the chains.

The pasta sheet pieces are loaded from the rolling and sectioning group into the appropriate support spaces or zones of the conveyor at an end (loading and unloading end) of the conveyor which projects from the oven.. The pasta sheet pieces, once they have crossed through the oven, whether in the entering or return path, are unloaded at the loading and unloading end at the beginning of the chain return run by taking advantage of the reciprocal angular movement between adjacent and contiguous support elements, i.e. when the support elements, due to the driving of the sprocket wheels of the conveyor, begin to angularly move apart from one another.

The extraction operation of the dried sheets from the support elements of the conveyor is quite problematic since it is necessary to enter between two angularly spaced support elements without knocking against or otherwise blocking the regular movement of the support elements and without damaging the dried product to be withdrawn.

EP-0 381 001 discloses a drying system for pasta layers, which includes a loading station, a warm-air drying station, an unloading station and a conveyor, the conveyor being designed to move the pasta layers throughout the drying system.

GB-0 677 284 discloses a drying oven comprising a conveyor including wire frames, and an extractor group for metal or other sheets including a table provided with suction cups. The table is designed to be inserted between adjacent wire frames and to displace metal sheets by means of the suction cups.

The main object of the present invention is that of providing a rolling, cutting and drying system for pasta, in particular pasta sheet, equipped with an extractor group capable of meeting the abovementioned requirements with high accuracy and reliability.

Another object of the present invention is that of providing a rolling, cutting and drying system of pasta equipped with extractor group of simple structure and therefore obtainable at competitive costs.

These and still other objects which shall better appear below are achieved with a rolling, cutting and drying plant for a dough as claimed in the independent claims 1 or 6.

Further aspects and advantages of the present invention will be more apparent from the following detailed description of specific embodiments of a system, made with reference to the accompanying set of drawings in which:
Figure 1 is a schematic top view of a system according to the present invention with parts cut away;
Figure 2 is a schematic side view with portions in cross-section of the system of Fig. 1;
Figure 3 is a cross-sectional view taken along the line III-III of Fig. 2;
Figure 4 is a side view of the extractor group of Fig. 1;
Figure 5 illustrates a detail of Fig. 4 on an enlarged scale;
Figure 6 is a side view with parts in cross-section of a detail of Figure 1; and
Figure 7 illustrates handling means of the system of Fig. 1.

In the set of drawings, the same or similar parts or components were marked with the same reference numerals.

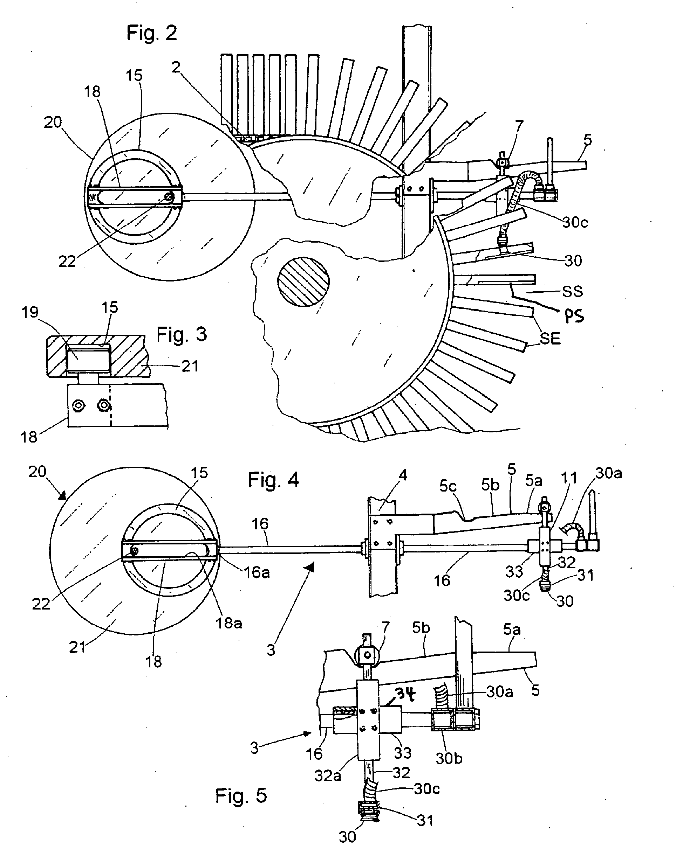

With reference to the above-listed Figures, a rolling, cutting and drying system 1 of doughy products and specifically pasta sheets according to the present invention comprises a kneader group (not shown in the drawings and of any suitable type) for obtaining a dough or doughy product to be treated, a rolling and sectioning group (not shown in the drawings and of any suitable type) of the dough fed to it by the kneader group and formed, as is known in the art, by one or more pairs of rolling cylinders and by one or more cutters for cutting pieces of rolled dough or doughy product, a drying oven of any suitable type, typically of hot air type as is known in the art, and a conveyor generically indicated with 2 having an uninterrupted sequence of substantially flat (preferably foraminate) support elements SE with peripheral holding flanges (Fig. 2) and maintained uniformly spaced from each other. The conveyor 2 is designed to receive from the rolling and sectioning group pieces PS of cut doughy product, typically pasta sheet pieces, and house them in support spaces or seats SS delimited between one support element SE and another so to convey the pasta sheet pieces PS loaded therein throughout the oven.

As is known in the art, the conveyor 2 is loaded on its upper part or run entering the oven with pieces PS of fresh sheet doughy material, at the loading-unloading end thereof, and is arranged to unload the dried pieces PS from its lower part or run exiting from the oven 2 at the same end, where a collection or receiving station of the dried pasta sheet pieces unloaded from the conveyor is provided.

The conveyor 2 can advantageously be a conveyor with two twin chains 2a, driven around a pair of respective sprocket wheels SW each placed at a respective end of the conveyor. The chains 2a are designed to support and to drive through the oven an uninterrupted sequence of support elements SE. Between two contiguous support elements SE, a support space or zone for the sheets is delimited, as is known in the art.

At the collection station, an extractor group 3 is provided which comprises handling means advantageously composed of one or by a group of suckers 30, for the dried pasta pieces PS, which are designed to enter into the support spaces delimited between one support element SE and another of the conveyor in order to draw at least one dried dough piece PS and transfer it to an receiving station which is located relatively far away from the loading-unloading end of the conveyor.

The handling means 30, e. g. a group of suckers in fluid communication with a suitable vacuum source (not shown) by means of a duct 30a possibly communicating with a collector 30b in turn in communication with one or more ducts 30c in fluid communication with the suckers 30, are supported by a crossbeam 31 which extends substantially parallel to the axis of rotation of the sprocket wheels SW and has a greater length than that of the flat support elements SE (Figs. 2, 4 and 5). The beam 31 is laterally supported by a pair of arms 32, which are spaced from each other by a distance greater than the (frontal) length of the support elements SE, so that they can be moved towards and alongside the conveyor so as to be arranged at the side of the pair of sprocket wheels SW while the beam 31 enters into a support space SS between two contiguous support elements SE (i.e. in withdrawing position), and the arms 32 can then be removed from the conveyor so to cause the beam 31 with the suckers 30 exit from the access space SS and to move the beam 31 into a release or laying position, all in synchrony with the movement of the conveyor 2.

To such end, the lateral arms 32 are supported by a respective cam-follower roller 7 designed to slide on a respective cam support element 5, e. g. supported overhanging from the fixed structure 4 of the oven. Each cam element 5 has its own upper edge suitably shaped, or rather it has, in order, a first rectilinear length or section 5a extending substantially horizontal, a second length 5b slightly tilted with respect to the first, and a lowered stop section 5c.

Preferably, a row of suckers 30 is provided distributed along the beam 31, which, if desired, can be made of a closed tubular element acting as collector for the suckers 30 and in communication with the duct 30c.

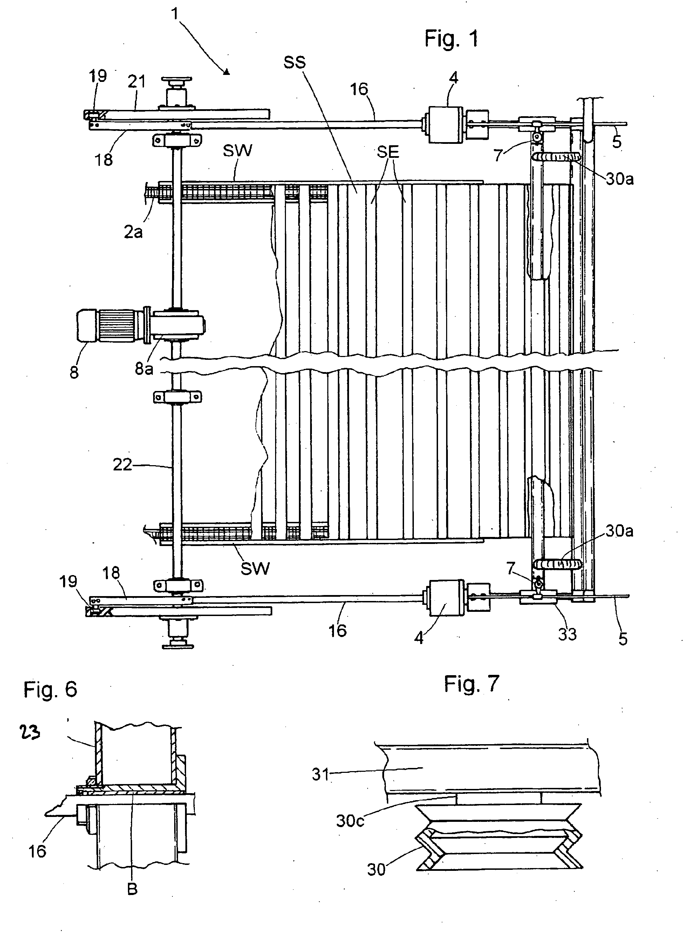

The movable element formed by the beam 31 with the suckers 30 and by the arms 32 with the cam-follower rollers 7 can be driven by control means 8, advantageously comprising an electric or pneumatic motor 8 (Fig. 1) of any suitable type, controllable by an electronic programmable unit of any suitable type, which also controls the advancing motion of the conveyor 2, as well as a motion transmission and conversion device, generically indicated with 20, suitable for transmitting and converting the rotating motion of the motor into an alternating or to-and-fro motion to be imparted to the movable element.

More particularly, the motion transmission and conversion device 20 comprises one or more, preferably a pair of, wheels or discs 21 keyed on a common shaft 22 supported for rotation, e. g. by the fixed structure 4 of the oven, and operatively connected, preferably with the interposition of a reducer 8a, to the output shaft of an electric or pneumatic motor 8. On one face of each wheel or disc of the disc elements 21, a respective circular cam 15 is formed or attached, which is located with its own center suitably offset with respect to the shaft 22 and has a much smaller diameter than the respective wheel or disc 21, e. g. equal to roughly half the diameter of the latter, so as to be totally arranged within the peripheral circumference of the respective wheel or disc 21.

On each circular cam 15, a rectilinear guide and cam-follower member 18 is mounted, which is diametrically arranged on the respective circular cam 15. One end or head 16a of a bar or connecting rod 16 is secured to an end of the cam-follower member 18. The connecting rod 16 is slidably supported in any suitable manner, e. g. by the fixed structure 4 of the oven, and its other end supports a respective support arm 32, e. g. by means of a cross structure 33 formed by a sleeve 34 inserted and locked on the connecting rod 16 and a flat intermediate portion 32a of a respective vertical support arm 32 of the beam 31. The end of connecting rod 16 is fixed, e. g. bolted to the sleeve 34. The guide and cam-follower member 18 engages the circular cam 15 with two cam-follower rollers 19 arranged one at each end of the cam-follower member 18 (Fig. 3), such that with each complete revolution of the wheel or disc 21 the connecting rod 16 completes one to-and-fro movement. To this end, the guide and cam-follower member 18 has an inner through slot 18a in which the shaft 22 is loosely inserted, and thus upon rotation of the respective disc or wheel 21, the cam-follower member 18 is caused to effect to-and-fro movements.

According to an embodiment of the present invention, the connecting rod 16 is mounted sliding, transverse to an upright 23 of the fixed structure of the oven (Fig. 6). Between connecting rod 16 and upright 23, a brass element B is provided to ensure a reduced sliding friction of the connecting rod. Preferably, between the stem and brass element, a scraper seal is preferably provided to always keep clean the connecting rod portion sliding therein, thereby preventing the latter from being quickly worn.

The operation of the dough rolling, cutting and drying system described above is quite simple and reliable. When current is fed to the motor group 8, the latter by means of the shaft 22 sets the wheels or discs 21 in rotation and thus the connecting rods 16 are moved to-and-fro along their own longitudinal axis. The movement of the connecting rods causes a corresponding movement of the rollers 7 along the shaped edge of the respective cam supports 5 and thus the simultaneous cyclic lifting-lowering of the arms 32, i. e. of the beam 31 and suckers 30. At the straight sections 5a of the cam supports, the beam 31 is located far from the support elements SE. At the tilted sections 5b it is located substantially in inserted position between two contiguous support elements SE and in the lowered segment 5c it is lowered atop one or more pieces PS of dried pasta. Coinciding with the descent of the beam 31, the suckers 30 are placed in communication with the vacuum source so that when they are in contact with the piece or pieces of pasta the latter are engaged and adhere to the suckers. In the return path, the beam 31 is lifted and at the straight segments 5a of the cam supports 5 the communication of the suckers 30 with the vacuum source is interrupted, so that the piece or pieces of pasta drawn and transferred outside the conveyor 2 are released to be loaded, e. g. on a belt conveyor for being forwarded to a packaging plant.

Advantageously, the cyclic rhythm with which the connecting rods 16 carry out a to-and-fro motion is correlated by means of the electronic unit with the angular speed of the sprocket wheels SW in such a manner that every support space SS between one support element SE and another is accessed by the extractor group 3.

The system described above is susceptible to numerous modifications and variations within the scope of protection as defined by the claims.

## Claims

1. A rolling, cutting and drying plant for a dough comprising at least one kneader group for obtaining a respective dough to be treated, at least one rolling and sectioning group of the dough fed to it by the or by a respective kneader group formed by at least one pair of rolling cylinders and by at least one cutter for forming dough pieces, at least one drying oven, at least one conveyor (2) having an uninterrupted sequence of substantially flat support elements (SE) maintained uniformly spaced from each other and suitable for receiving dough pieces from said at least one rolling and sectioning group and for housing them in support spaces delimited between one support element and another in order to convey said dough pieces loaded therein throughout the oven, and a receiving station of dried pasta sheet pieces (PS) unloaded from the conveyor (2), ***characterized in that*** it comprises an extractor group (3) at said receiving station, which comprises handling means (30) for at least one dried dough piece (PS), said handling means arranged to enter into said support spaces delimited between one support element (SE) and another of the conveyor (2) in order to withdraw at least one dried dough piece (PS) and transfer it to said receiving station, and a motion transmission and conversion device (20) for moving said handling means (30) in synchrony with the movement of said conveyor (2),
and **in that** said extractor group (3) comprises a support beam member (31) which extends substantially parallel to the axis of rotation of sprooket wheels (SW) placed at a respective end of the conveyor and has a greater length than that of the support elements (SE), and **in that** said beam (31) is laterally supported by a pair of support arms (32) spaced from each other by a greater distance than the length of said support elements (SE), whereby they are moved towards and alongside a respective conveyor (2) and allow said beam member (31) to enter into a support space (SS) between two contiguous support elements (SE), when they are in a mutually spaced withdrawing position, and whereby they are removed from the conveyor to move said beam member (31) into a release or laying position in synchrony with the conveyor movement (2).

2. A plant according to claim 1, **characterized in that** said handling means (30) comprises at least one sucker means.

3. A plant according to claim 2, **characterized in that** said at least one sucker means (30) comprises at least one vacuum source arranged to be placed, upon control, in fluid communication with the sucker means.

4. A plant according to any previous, **characterized in that** said motion transmission and conversion device (20) comprises at least one cam support element (5) and a respective cam-follower element (7) for the support of each support arm (32), each cam support element (5) having an upper cam edge including, in the order, a first rectilinear segment (5a), a second segment (5b) slightly tilted with respect to the first and a lowered stop segment (5c), for the to-and-fro sliding of a respective cam-follower element (7).

5. A plant according to any preceding claim, **characterized in that** said motion transmission and conversion device (20) comprises motor means (8), an electronic unit (EU) suitable for controlling said motor means (8) and the advancing motion of said at least one conveyor (2), said motion transmission and conversion device (20) arranged to transmit and convert the rotary motion of said motor means (8) into an alternating to-and-fro motion to be imparted to said handling means (30).

6. A rolling, cutting and drying plant for a dough comprising at least one kneader group for obtaining a respective dough to be treated, at least one rolling and sectioning group of the dough fed to it by the or by a respective kneader group formed by at least one pair of rolling cylinders and by at least one cutter for forming dough pieces, at least one drying oven, at least one conveyor (2) having an uninterrupted sequence of substantially flat support elements (SE) maintained uniformly spaced from each other and suitable for receiving dough pieces from said at least one rolling and sectioning group and for housing them in support spaces delimited between one support element and another in order to convey said dough pieces loaded therein throughout the oven, and a receiving station of dried pasta sheet pieces (PS) unloaded from the conveyor (2), ***characterized in* that** it comprises an extractor group (3) at said receiving station, which comprises handling means (30) for at least one dried dough piece (PS), said handling means arranged to enter into said support spaces delimited between one support element (SE) and another of the conveyor (2) in order to withdraw at least one dried dough piece (PS) and transfer it to said receiving station, and a motion transmission and conversion device (20) for moving said handling means (30) in synchrony with the movement of said conveyor (2),
said motion transmission and conversion device (20) comprising motor means (8), and being arranged to transmit and convert the rotary motion of said motor means (8) into an alternating to-and-fro motion to be imparted to said handling means (30).
and **in that** said motion transmission and conversion device (20) comprises at least one pair of wheels or discs (21) keyed on a shaft (22) supported for rotation and operatively connected with said motor means (8); a circular cam member (15) provided on one face of each wheel or disc (21) and located with its center offset with respect to said shaft (22), the diameter of each cam member (15) being smaller than the diameter of the respective wheel or disc (21), thereby being arranged within the overall dimensions of its respective wheel or disc (21); a rectilinear guide and cam-follower member (18) slidably engaging said cam member (15) with a pair of cam-follower elements (19), thereby being diametrically arranged on the respective circular cam member (15); and at least one bar or connecting rod member (16) having its one end or head (16a) secured to said guide and cam-follower member (18) and its other end in driving engagement with said extractor group (3), whereby at every complete revolution of the wheel or disc (21) the connecting rod (16) completes one to-and-fro movement.

7. A plant according to claim 6, **characterized in that** said extractor group (3) comprises a support beam member (31) which extends substantially parallel to the axis of rotation of sprocket wheels (SW) placed at a respective end of the conveyor and has a greater length than that of the support elements (SE), and **in that** said beam (31) is laterally supported by a pair of support arms (32) spaced from each other by a greater distance than the length of said support elements (SE), whereby they are moved towards and alongside a respective conveyor (2) and allow said beam member (31) to enter into a support space (SS) between two contiguous support elements (SE), when they are in a mutually spaced withdrawing position, and whereby they are removed from the conveyor to move said beam member (31) into a release or laying position in synchrony with the conveyor movement (2).

8. A plant according to claim 7, **characterized in that** each bar or connecting rod member (16) is connected to a respective support arm (32) by means of a cross structure (33) comprising a sleeve (34) inserted and locked on the connecting rod (16) and an intermediate portion (32a) of the respective vertical arm (32).

9. A plant according to claim 7 or 8, **characterized in that** each guide and cam-follower member (18) has an inner through slot (18a) in which the shaft (22) is slidably engaged whereby, and with respect to which, upon the rotation of the respective disc or wheel (21), said cam follower member (18) carries out to-and-fro movements.

## Patentansprüche

1. Eine Anlage zum Ausrollen, Schneiden und Trocknen für einen Teig, umfassend zumindest eine Knetgruppe, um einen jeweiligen zu behandelnden Teig zu erhalten, zumindest eine Roll- und Aufteilgruppe für den Teig, der ihr entweder durch die oder durch eine jeweilige Knetgruppe zugeführt wird, die durch zumindest ein Paar rollender Zylinder und durch zumindest einen Schneider zum Formen von Teigstücken gebildet ist, zumindest einen Trocknungsofen, zumindest einen Förderer (2) mit einer ununterbrochenen Abfolge im Wesentlichen flacher Unterstützungselemente (SE), die gleichmäßig voneinander beabstandet gehalten werden, und zur Aufnahme von Teigstücken auf der zumindest einen Roll- und Aufteilgruppe geeignet sind, und zu ihrer Beherbergung in Unterstützungsabständen, die zwischen einem Unterstützungselement und einem anderen eingegrenzt sind, um die darin geladenen Teigstücke durch den Ofen zu fördern, und eine Aufnahmestation für getrocknete Pastablattstücke (PS), die aus dem Förderer (2) entladen werden, **dadurch gekennzeichnet, dass** sie eine Extraktorgruppe (3) an der Aufnahmestation umfasst, welche Handhabungsmittel (30) umfasst, für zumindest ein getrocknetes Teigstück (PS), wobei die Handhabungsmittel angeordnet sind, um in die Unterstützungsabstände eingefügt zu werden, die zwischen einem Unterstützungselement (SE) und einem anderen des Förderers (2) eingegrenzt sind, um zumindest ein getrocknetes Teigstück (PS) abzuziehen und es zu der Aufnahmestation zu übertragen, und eine Bewegungsübertragungs- und Umwandlungsvorrichtung (20) zum Bewegen der Handhabungsmittel (30) synchron mit der Bewegung des Förderers (2),
und **dadurch**, dass die Extraktorgruppe (3) ein Unterstützungsträgerbauteil (31) umfasst, welches sich im Wesentlichen parallel zu der Rotationsachse der Kettenräder (SW) erstreckt, die sich an einem jeweiligen Ende des Förderers befinden, und welches eine größere Länge aufweist, als die der Unterstützungselemente (SE), und **dadurch**, dass der Träger (31) lateral durch ein Paar von Unterstützungsträgern (32) unterstützt wird, die mit einer größeren Entfernung voneinander beabstandet sind als die Länge der Unterstützungselemente (SE), wobei sie in Richtung und entlang eines jeweiligen Förderers (2) bewegt werden, und dem Trägerbauteil (31) erlauben in einen Unterstützungsabstand (SS) zwischen zwei aufeinanderfolgenden Unterstützungselementen (SE) eingefügt zu werden, wenn sie in einer gegenseitig beabstandeten abziehenden Position vorliegen, und wobei sie von dem Zulieferer entfernt werden, um das Trägerbauteil (31) in eine Freigabe- oder Liegeposition synchron mit der Fördererbewegung (2) zu bewegen.

2. Anlage nach Anspruch 1, **dadurch gekennzeichnet, dass** die Handhabungsmittel (30) zumindest ein Saugmittel umfassen.

3. Anlage nach Anspruch 2, **dadurch gekennzeichnet, dass** das zumindest eine Saugmittel (20) zumindest eine Vakuumquelle umfasst, die so angeordnet ist, um gemäß Steuerung in flüssiger Kommunikation mit dem Saugmittel positioniert zu werden.

4. Anlage nach irgendeinem der vorherigen Ansprüche, **dadurch gekennzeichnet, dass** die Bewegungsübertragungs- und Umwandlungsvorrichtung (20) zumindest ein Nockenunterstützungselement (5) und ein jeweiliges Nockenfolgeelement (7) zur Unterstützung jedes Unterstützungsarms (32) umfasst, wobei jedes Nockenunterstützungselement (5) eine obere Nockenkante aufweist, einschließlich, in der Reihenfolge, ein erstes rechtwinkliges Segment (5a), ein zweites Segment (5b), welches leicht in Bezug zu dem ersten geneigt ist, und ein abgesenktes Stoppsegment (5c) für die Auf- und Abverschiebung eines jeweiligen Nockenfolgerelements (7).

5. Anlage nach irgendeinem der vorherigen Ansprüche, **dadurch gekennzeichnet, dass** die Bewegungsübertragungs- und Umwandlungsvorrichtung (20) Motormittel (8) umfasst, eine elektronische Einheit (EU), die zum Steuern der Motormittel (8) und der Voranbewegung des zumindest einen Förderers (2) geeignet ist, wobei die Bewegungsübertragungs- und Umwandlungsvorrichtung (20) zum Übertragen und Umwandeln der Drehbewegung der Motormittel (8) in eine abwechselnde Auf- und Abbewegung angeordnet ist, die auf die Handhabungsmittel (30) wirken soll.

6. Eine Anlage zum Rollen, Schneiden und Trocknen eines Teiges, umfassend zumindest eine Knetgruppe zum Erhalten eines zu behandelnden jeweiligen Teigs, zumindest eine Roll- und Trenngruppe für den Teig, der durch sie oder durch eine jeweilige Knetgruppe zugeführt wird, die zumindest aus einem Paar rollender Zylinder und durch zumindest einen Schneider zum Formen von Teigstücken gebildet ist, zumindest einen Trocknungsofen, zumindest einen Förderer (2) mit einer ununterbrochenen Abfolge im Wesentlichen flacher Unterstützungselement (SE), die gleichmäßig voneinander beanstandet erhalten werden, und zur Aufnahme von Teigstücken aus einer Roll- und Trenngruppe geeignet sind, und zu ihrer Beherbergung in Unterstützungsabständen, die zwischen einem Unterstützungselement und einem anderen eingegrenzt sind, um die darin geladenen Teigstücke durch den Ofen zu fördern und eine Aufnahmestation für getrocknete Pastablattstücke (PS), die aus dem Förderer (2) entladen werden, **dadurch gekennzeichnet, dass** sie eine Extraktorgruppe (3) an der Aufnahmestation umfasst, welche Handhabungsmittel (30) für zumindest ein getrocknetes Teigstück (PS) umfasst, wobei die Handhabungsmittel zum Einfügen in die Unterstützungsabstände angeordnet sind, die zwischen einem Unterstützungselement (SE) und einem anderen des Förderers (2) eingegrenzt sind, um zumindest ein getrocknetes Teigstück (PS) abzuziehen und es zu der Aufnahmestation zu übertragen, und eine Bewegungsübertragungs- und Umwandlungsvorrichtung (20) zum Bewegen der Handhabungsmittel (30) synchron mit der Bewegung des Förderers (2),
wobei die Bewegungsübertragungs- und Umwandlungsvorrichtung (20) Motormittel (8) umfasst und zur Übertragung und Umwandlung der Drehbewegung der Motormittel (8) in eine abwechselnde Auf- und Abbewegung angeordnet ist, die auf die Handhabungsmittel (30) wirken sollen,
und **dadurch**, dass die Bewegungsübertragungs- und Umwandlungsvorrichtung (20) zumindest ein Paar von Rädern oder Scheiben (21) umfasst, die sich auf einer Welle (22) befinden, die für eine Drehung gestützt ist, und wirksam mit den Motormitteln (8) verbunden ist; und ein kreisförmiges Nockenbauteil (15), welches auf einer Seite jedes Rades oder jeder Scheibe (21) bereitgestellt ist, und außermittig in Bezug zu der Welle (22) angeordnet ist, wobei der Durchmesser jedes Nockenbauteils (15) kleiner als der Durchmesser des jeweiligen Rades oder der jeweiligen Schreibe (21) ist, wobei sie innerhalb der Gesamtdimensionen ihres jeweiligen Rades oder Scheibe (21) angeordnet sind; und ein rechtwinkliges Führungs- und Nockenfolgebauteil (18), welches verschiebbar in das Nockenbauteil (15) mit einem Paar von Nockenfolgerelementen (19) eingreift, und dabei diametral auf dem jeweiligen kreisförmigen Nockenbauteil (15) angeordnet ist;
und zumindest ein Balken oder Verbindungsstangenbauteil (16) mit einem Ende oder Kopf (16a), welches an das Führungs- und Nockenfolgebauteil (18) gesichert ist, und seinem anderen Ende in antreibendem Eingriff mit der Extraktorgruppe (3) steht, wobei bei jeder vollständigen Umdrehung des Rades oder der Scheibe (21) die Verbindungsstange (16) eine Auf- und Abbewegung vervollständigt.

7. Anlage nach Anspruch 6, **dadurch gekennzeichnet, dass** die Extraktorgruppe (3) ein Unterstützungsträgerbauteil (31) umfasst, welches sich im Wesentlichen parallel zu der Rotationsachse der Kettenräder (SW) erstreckt und an einem jeweiligen Ende des Förderers angeordnet ist und eine größere Länge aufweist, als die der Unterstützungselemente (SE), und **dadurch**, dass der Träger (31) lateral durch ein Paar von Unterstützungsarmen (32) unterstützt ist, die durch einen größeren Abstand voneinander entfernt sind als die Länge der Unterstützungselemente (SE), wobei sie in Richtung und entlang eines jeweiligen Förderers (2) bewegt werden, und dem Trägerbauteil (31) ermöglichen in einen Unterstützungsraum (SS) zwischen zwei aufeinanderfolgende Unterstützungselemente (SE) einzutreten, wenn sie in einer gegenseitig beabstandeten herausziehenden Position sind, und wobei sie aus dem Förderer entfernt werden, um das Trägerbauteil (31) in eine Freigabe- oder liegende Position synchron mit der Fördererbewegung (2) zu bringen.

8. Anlage nach Anspruch 7, **dadurch gekennzeichnet, dass** jedes Balken- oder verbindende Stangenbauteil (16) mit einem jeweiligen Unterstützungsarm (32) mittels einer Kreuzstruktur (33) verbunden ist, die eine Hülse (34) umfasst, die in die verbindende Stange (16) eingefügt und verriegelt ist, und einen Zwischenabschnitt (32a) des jeweiligen vertikalen Arms (32).

9. Anlage nach Anspruch 7 oder 8, **dadurch gekennzeichnet**, das jedes Führungs- und Nockenfolgebauteil (18) einen inneren Durchgangsschlitz (18a) aufweist, in welchem der Schaft (22) verschiebbar eingreift, wobei und in Bezug dazu das Nockenfolgebauteil (18) Auf- und Abbewegungen ausführt als Folge der Rotation der jeweiligen Scheibe oder des Rades (21).

## Revendications

1. Installation pour rouler, découper et sécher des pâtes comprenant au moins un ensemble de pétrissage pour l'obtention d'une pâte correspondante à traiter, au moins un ensemble de roulage et de sectionnement de la pâte qui lui est fournie par l'ensemble ou un ensemble de pétrissage respectif constitué d'au moins une paire de cylindres de roulage et d'au moins un moyen de coupe pour former des morceaux de pâte, au moins un four de séchage, au moins un moyen d'acheminement (2) présentant une séquence ininterrompue d'éléments de support sensiblement plats (SE) maintenus espacés uniformément l'un de l'autre et adaptés pour recevoir des morceaux de pâte à partir dudit au moins un ensemble de roulage et de sectionnement et pour les loger dans des espaces de support délimités entre un et un autre élément de support afin d'acheminer lesdits morceaux de pâte qui y sont chargés à travers le four, et un poste de réception de morceaux de feuilles de pâtes séchées (PS) déchargés du moyen d'acheminement (2), **caractérisée en ce qu'**elle comprend un ensemble d'extraction (3) au niveau dudit poste de réception, qui comprend des moyens de manipulation (30) pour au moins un morceau de pâte séchée (PS), lesdits moyens de manipulation étant agencés pour pénétrer dans lesdits espaces de support délimités entre un et un autre élément de support (SE) du moyen d'acheminement (2) afin d'extraire au moins un morceau de pâte séchée (PS) et de le transférer audit poste de réception, et un dispositif de transmission et de conversion de mouvement (20) pour déplacer lesdits moyens de manipulation (30) en synchronisation avec le déplacement dudit moyen d'acheminement (2),
et **en ce que** ledit ensemble d'extraction (3) comprend un organe formant poutre de support (31) qui s'étend sensiblement parallèlement à l'axe de rotation de roues dentées (SW) placées à une extrémité respective du moyen d'acheminement et qui présente une longueur supérieure à celle des éléments de support (SE), et **en ce que** ladite poutre (31) est supportée latéralement par une paire de bras de support (32) espacés l'un de l'autre d'une distance supérieure à la longueur desdits éléments de support (SE), de façon à être déplacés en direction d'un moyen d'acheminement respectif (2) et à côté de celui-ci et à permettre audit organe formant poutre (31) de pénétrer dans un espace de support (SS) entre deux éléments de support (SE) contigus, lorsqu'ils sont dans une position de rétraction et mutuellement espacés, et moyennant quoi ils sont enlevés du moyen d'acheminement pour déplacer ledit organe formant poutre (31) dans une position de libération ou de pose en synchronisation avec le déplacement du moyen d'acheminement (2).

2. Installation selon la revendication 1, **caractérisée en ce que** lesdits moyens de manipulation (30) comprennent au moins un moyen d'aspiration.

3. Installation selon la revendication 2, **caractérisée en ce que** ledit au moins un moyen d'aspiration (30) comprend au moins une source de vide agencée pour être placée, lorsqu'elle est commandée, en communication de fluide avec le moyen d'aspiration.

4. Installation selon l'une quelconque des revendications précédentes, **caractérisée en ce que** ledit dispositif de transmission et de conversion de mouvement (20) comprend au moins un élément support de came (5) et un élément respectif suiveur de came (7) pour le support de chaque bras de support (32), chaque élément support de came (5) présentant un bord de came supérieur qui comprend, dans l'ordre, un premier segment rectiligne (5a), un deuxième segment (5b) incliné légèrement par rapport au premier, et un segment d'arrêt abaissé (5c), pour le glissement en va-et-vient de l'élément respectif suiveur de came (7).

5. Installation selon l'une quelconque des revendications précédentes, **caractérisée en ce que** ledit dispositif de transmission et de conversion de mouvement (20) comprend des moyens moteurs (8), une unité électronique (EU) adaptée pour commander lesdits moyens moteurs (8) et leur déplacement d'avance dudit au moins un moyen d'acheminement (2), ledit dispositif de transmission et de conversion de mouvement (20) étant agencé pour transmettre et convertir le mouvement rotatif desdits moyens moteurs (8) en un déplacement alternant en va-et-vient destiné à être imparti auxdits moyens de manipulation (30).

6. Installation pour rouler, découper et sécher des pâtes comprenant au moins un ensemble de pétrissage pour l'obtention d'une pâte correspondante à traiter, au moins un ensemble de roulage et de sectionnement de la pâte qui lui est fournie par l'ensemble ou un ensemble de pétrissage respectif constitué d'au moins une paire de cylindres de roulage et d'au moins un moyen de coupe pour former des morceaux de pâte, au moins un four de séchage, au moins un moyen d'acheminement (2) présentant une séquence ininterrompue d'éléments de support sensiblement plats (SE) maintenus espacés uniformément l'un de l'autre et adaptés pour recevoir des morceaux de pâte à partir dudit au moins un ensemble de roulage et de sectionnement et pour les loger dans des espaces de support délimités entre un et un autre élément de support afin d'acheminer les morceaux de pâte qui y sont chargés à travers le four, et un poste de réception de morceaux de feuilles de pâtes séchées (PS) déchargés du moyen d'acheminement (2), **caractérisée en ce qu'**elle comprend un ensemble d'extraction (3) au niveau dudit poste de réception, qui comprend des moyens de manipulation (30) pour au moins un morceau de pâte séchée (PS), lesdits moyens de manipulation étant agencés pour pénétrer dans lesdits espaces de support délimités entre un et un autre élément de support (SE) du moyen d'acheminement (2) afin d'extraire au moins un morceau de pâte séchée (PS) et de le transférer audit poste de réception, et un dispositif de transmission et de conversion de mouvement (20) pour déplacer lesdits moyens de manipulation (30) en synchronisation avec le déplacement dudit moyen d'acheminement (2),
ledit dispositif de transmission et de conversion de mouvement (20) comprenant des moyens moteurs (8), et étant adapté pour transmettre et convertir le déplacement rotatif desdits moyens moteurs (8) en un déplacement alternant en va-et-vient destiné à être imparti auxdits moyens de manipulation (30),
et **en ce que** ledit dispositif de transmission et de conversion de mouvement (20) comprend au moins une paire de roues ou de disques (21) clavetés sur un arbre (22) supporté pour leur rotation et reliés en fonctionnement auxdits moyens moteurs (8) ; un organe formant came circulaire (15) prévu sur une face de chaque roue ou disque (21) est situé avec son centre décalé par rapport audit arbre (22), le diamètre de chaque organe formant came (15) étant inférieur au diamètre de la roue ou disque respectif (21), de façon à être agencé à l'intérieur des dimensions globales de sa roue ou disque respectif (21) ; un organe formant guide rectiligne et suiveur de came (18) mettant en prise de façon glissante ledit organe formant came (15) avec une paire d'éléments suiveurs de came (19), étant ainsi agencé de façon diamétrale sur l'organe formant came circulaire respectif (15) ; et au moins un organe formant barre ou bielle de liaison (16) ayant l'une de ses extrémités ou sa tête (16a) fixée audit organe formant guide et suiveur de came (18) et son autre extrémité en prise positive avec ledit ensemble d'extraction (3), de sorte que, pour chaque révolution complète de la roue ou disque (21) la bielle de liaison (16) effectue un déplacement de va-et-vient.

7. Installation selon la revendication 6, **caractérisée en ce que** ledit ensemble d'extraction (3) comprend un organe formant poutre de support (31) qui s'étend sensiblement parallèlement à l'axe de rotation de roues dentées (SW) situées à une extrémité respective du moyen d'acheminement et présente une longueur supérieure à celle des éléments de support (SE), et **en ce que** ladite poutre (31) est supportée latéralement par une paire de bras de support (32) espacés l'un de l'autre d'une distance supérieure à la longueur desdits éléments de support (SE), de façon qu'ils soient déplacés en direction d'un moyen d'acheminement respectif (2) et à côté de celui-ci et permettent audit organe formant poutre (31) de pénétrer dans un espace de support (SS) entre deux éléments de support contigus (SE), quand ils se trouvent dans une position de rétraction espacés l'un de l'autre, et de façon qu'ils soient enlevés du moyen d'acheminement pour déplacer ledit organe formant poutre (31) dans une position de libération ou de pose en synchronisation avec le déplacement du moyen d'acheminement (2).

8. Installation selon la revendication 7, **caractérisée en ce que** chaque organe formant barre ou bielle de liaison (16) est relié à un bras de support respectif (32) au moyen d'une structure cruciforme (33) comprenant une douille (34) insérée dans la bielle de liaison (16) et verrouillée sur celle-ci, et une partie intermédiaire (32a) du bras vertical respectif (32).

9. Installation selon la revendication 7 ou 8, **caractérisée en ce que** chaque organe formant guide et suiveur de came (18) présente une fente traversante interne (18a) à l'intérieur de laquelle l'arbre (22) est en prise de façon glissante, et par rapport à laquelle, suite à la rotation du disque ou roue (21) respectif, ledit organe formant suiveur de came (18) effectue des déplacements de va-et-vient.
